(19) Europäisches Patentamt / European Patent Office / Office européen des brevets

(11) **EP 4 684 998 A1**

(12) **EUROPEAN PATENT APPLICATION**

(43) Date of publication:
**28.01.2026  Bulletin 2026/05**

(21) Application number: **24190863.1**

(22) Date of filing: **25.07.2024**

(51) International Patent Classification (IPC):
**B60L 1/00** *(2006.01)*   **B60L 15/20** *(2006.01)*
**B60L 50/60** *(2019.01)*

(52) Cooperative Patent Classification (CPC):
**B60L 1/00; B60L 15/2045; B60L 50/60; G01C 21/3469;** B60L 2240/62; B60L 2240/64; B60L 2240/647; B60L 2240/66; B60L 2240/667; B60L 2260/52; B60L 2260/54

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **VOLVO TRUCK CORPORATION**
**405 08 Göteborg (SE)**

(72) Inventor: **ASKERDAL, Mikael**
**439 51 ÅSA (SE)**

(74) Representative: **Ström & Gulliksson AB**
**P.O. Box 4188**
**203 13 Malmö (SE)**

Remarks:
A request for correction of the description has been filed pursuant to Rule 139 EPC. A decision on the request will be taken during the proceedings before the Examining Division (Guidelines for Examination in the EPO, A-V, 3.).

(54) **SYSTEM FOR ESTIMATING AND ADJUSTING VEHICLE ENERGY CONSUMPTION ON A ROAD SEGMENT BASED ON PREDICTED GENERAL WEATHER CONDITIONS**

(57)   A vehicle-weather resistance parameter indicates a localized weather condition for a vehicle traveling a road segment of a travel route, based on forecasted generalized weather information for the road segment. The vehicle-weather resistance parameter may be generated by a function that is produced using previously collected vehicle data from vehicles of different vehicle types that traveled the road segment under various weather conditions. The vehicle-weather resistance parameter may be employed to estimate a segment energy consumption, which is an amount of energy consumed by a vehicle to travel the road segment in the weather conditions indicated by the forecasted generalized weather information. By comparing the estimated segment energy consumption to a stored energy level (e.g., charge) in a vehicle, one may determine whether there is an energy deficit and, if so, operation of electrical components of the vehicle may be adjusted to reduce or avoid the energy deficit.

FIG. 4

EP 4 684 998 A1

Description

TECHNICAL FIELD

The disclosure relates generally to vehicular energy consumption. In particular aspects, the disclosure relates to predicted consumption of energy of a vehicle based on general weather conditions. The disclosure can be applied to heavy-duty vehicles, such as trucks, buses, and construction equipment, as well as other vehicle types, including passenger cars. Although the disclosure may be described with respect to a particular vehicle, the disclosure is not restricted to any particular vehicle.

BACKGROUND

Electrically powered vehicles (EPVs) have an onboard battery(ies) to provide power for vehicle operation. Hybrid electric vehicles (HEVs) are configured to operate on battery power for limited periods of time depending on battery capacity and/or on operational settings and operate on power from a combustion engine at other times. In HEVs, the combustion engine provides a backup source of power in case the state of charge of the battery is insufficient for operation. On the other hand, a battery is a sole source of power in EPVs. Thus, EPVs are configured to operate exclusively on battery power at all times during their operation. In the case of EPVs, the vehicle will no longer be able to continue to operate when the battery power source no longer has a sufficient state of charge (SoC) (i.e., energy) to operate the vehicle.

Vehicular trip planning software and vehicular range are important to vehicle users, particularly for HEV vehicles where recharging stations may be limited in certain areas, particularly in rural areas. For example, vehicle energy consumption estimation for a selected travel route and/or to project a range of a vehicle based on a current charge may be used to avoid situations in which the state of charge of a vehicle battery is insufficient for vehicle operation because recharging is not available.

SUMMARY

Aspects disclosed herein include a system for estimating and adjusting vehicle energy consumption on a road segment based on predicted general weather conditions. In an example, the estimated energy consumption on a road segment in predicted general weather conditions is based on a correlation of historical generalized weather conditions to vehicle-motion resistance. Related methods of estimating and adjusting vehicle energy consumption are also disclosed. Among the factors that contribute to the amount of energy that a vehicle consumes to travel a road segment of a travel route are physical aspects of the specific road segment, vehicle data, and the environment immediately around the vehicle at the time of travel. While the physical aspects of the road segment and the vehicle may remain the same, the environment immediately around the vehicle, or localized weather, changes with the generalized weather in the area of the road segment. Although generalized weather information for a time of travel may be available, localized weather that is specific to the vehicle and the road segment may not be available. Generalized weather information is not necessarily indicative to the exact weather being experienced at a given time on a specific road segment being traveled.

In this regard, to provide a more accurate way of estimating energy consumption based on generalized weather conditions and adjust vehicle energy consumption based on the estimated energy consumption, exemplary aspects of the disclosure involve generating a vehicle-weather resistance parameter. The vehicle-weather resistance parameter indicates a localized weather condition for a vehicle traveling a road segment of a travel route, based on forecasted generalized weather information for the road segment. In some examples, the vehicle-weather resistance parameter may be generated by a function that is produced using previously collected vehicle data from vehicles of different vehicle types that traveled the road segment under various weather conditions. The vehicle-weather resistance parameter may be employed to estimate a segment energy consumption, which is an amount of energy consumed by a vehicle to travel the road segment in the weather conditions indicated by the forecasted generalized weather information. By comparing the estimated segment energy consumption to a stored energy level (e.g., charge) in a vehicle, it may be possible to determine that either there is enough charge in the vehicle to travel the road segment or there is an energy deficit. In the case of an energy deficit, operation of electrical components of the vehicle may be adjusted to reduce or avoid the energy deficit.

According to a first aspect of the disclosure, a computer system including processing circuitry is disclosed. The processing circuitry is configured to generate, based on forecasted general weather conditions, a first vehicle-weather resistance parameter for a first road segment of a travel route of a vehicle at a first predicted travel time; estimate a first segment energy consumption for the vehicle to travel the first road segment at the first predicted travel time based on the first vehicle-weather resistance parameter; determine a first segment energy deficit for the vehicle to travel the first road segment based on the first segment energy consumption and a first stored energy level of the vehicle; and adjust operation of electrical components of the vehicle to reduce the first segment energy deficit.

The first aspect of the disclosure may seek to avoid depleting a charge of a battery in an electrically powered vehicle before completing a travel route. A technical benefit may include more accurately estimating the energy consumption of a vehicle on a first road segment and adjusting a rate of energy consumption.

Optionally, in some examples, including in at least one preferred example, the computer system is further configured to estimate of the first segment energy consumption of the vehicle on the first road segment based on a predicted travel speed of the vehicle on the first road segment, and adjust operation of the electrical components of the vehicle, further including reducing an actual travel speed of the vehicle on the first road segment to less than the predicted travel speed. A technical benefit may include reducing a speed of travel to reduce a rate of energy consumption.

Optionally, in some examples, including in at least one preferred example, the computer system is further configured to determine the predicted travel speed based on one of a current speed of the vehicle and a posted speed limit for the first road segment. A technical benefit may include having optional sources of predicted travel speed.

Optionally, in some examples, including in at least one preferred example, the computer system is further configured to estimate the first vehicle-weather resistance parameter for the first road segment based on a function of the forecasted general weather conditions on the first road segment for a predicted travel time. A technical benefit may include generating a more accurate vehicle-weather resistance parameter by employing a function derived from vehicle data of vehicles that travel the road segment in different general weather conditions.

Optionally, in some examples, including in at least one preferred example, the computer system is further configured to estimate the first vehicle-weather resistance parameter for the first road segment based on a function of predicted traffic conditions on the first road segment for a predicted travel time. A technical benefit may include generating a more accurate vehicle-weather resistance parameter by employing a function derived from vehicle data of vehicles that travel the road segment in different traffic conditions.

Optionally, in some examples, including in at least one preferred example, the computer system is further configured to estimate the first segment energy consumption of the vehicle to travel the first road segment based on a vehicle type. A technical benefit may include estimating a first segment energy consumption specific to a vehicle type.

Optionally, in some examples, including in at least one preferred example, the vehicle type includes one of a truck, a bus, and a passenger car. A technical benefit may include estimating a first segment energy consumption specific to a vehicle type.

Optionally in some examples, including in at least one preferred example, the travel route includes at least a second road segment between a current location of the vehicle and the first road segment, and the predicted travel time on the first road segment is based on a current time and a predicted travel time on the at least a second road segment. A technical benefit may include predicting the travel time of the first road segment before arriving at the first road segment.

Optionally, in some examples, including in at least one preferred example, the computer system is further configured to generate, based on the forecasted general weather conditions, a second vehicle-weather resistance parameter for the at least a second road segment at a second predicted travel time; estimate a second segment energy consumption for the vehicle to travel the at least a second road segment at the second predicted travel time based on the second vehicle-weather resistance parameter; determine a second segment energy deficit for the vehicle to travel the at least a second road segment based on the second segment energy consumption and a second stored energy level of the vehicle; and adjust operation of the electrical components of the vehicle to reduce the second segment energy deficit. A technical benefit may include adjusting the rate of energy consumption for a travel route, including multiple road segments.

Optionally, in some examples, including in at least one preferred example, the computer system further includes an electronic control unit (ECU) disposed in the vehicle. A technical benefit may include computer circuitry that can either communicate with other computer circuitry of the computer system or perform the disclosed method.

Optionally, in some examples, including in at least one preferred example, the ECU disposed in the vehicle is configured to estimate the first segment energy consumption. A technical benefit may include avoiding the need to communicate with other computer circuitry.

Optionally, in some examples, including in at least one preferred example, the computer system further includes a server configured to couple to the vehicle through a wireless interface. A technical benefit may include avoiding the need for computer circuitry in the vehicle to perform the disclosed method.

Optionally, in some examples, including in at least one preferred example, the computer system is configured to generate the first vehicle-weather resistance parameter for the first road segment based on a first function derived from vehicle data provided by vehicles that travel the first road segment and the generalized weather conditions at times corresponding to the vehicle data. A technical benefit may include using actual vehicle data to more accurately estimate energy consumption.

Optionally, in some examples, including in at least one preferred example, the computer system is further configured to dynamically update the first function based on updated vehicle data. A technical benefit may include improving the function based on more recent information, which may indicate changes in the conditions experienced by vehicles under a general weather condition.

Optionally, in some examples, including in at least one preferred example, the electrical components of the vehicle include first electrical components directed to one or more of lighting, safety, automation, convenience, passenger comfort, and passenger entertainment; the estimate of the first segment energy consumption of the vehicle is based on a predicted energy consumption of the first electrical components; and adjusting energy consumption of the electrical components of the vehicle further includes reducing a rate of energy consumption of at least one of the first electrical components. A technical benefit may include reducing a rate of energy consumption of the vehicle on the first road segment without slowing down a travel speed.

Optionally, in some examples, including in at least one preferred example, the predicted energy consumption of the first electrical components is based on a current driver of the vehicle. A technical benefit may include a more accurate estimation of the first electrical components based on a driver of the vehicle.

Optionally, in some examples, including in at least one preferred example, the computer system is further configured to update the first function in response to receiving newer vehicle data provided by vehicles that travel the first road segment and the corresponding general weather conditions. A technical benefit may include improving the function based on more recent information, which may indicate changes in the conditions experienced by vehicles under a general weather condition.

Optionally, in some examples, including in at least one preferred example, the first vehicle-weather resistance parameter is based on a combination of air resistance and rolling resistance caused by the forecasted general weather conditions. A technical benefit may include including all sources of motion resistance in the vehicle-weather resistance parameter.

According to a second aspect of the disclosure, a method in a computer system is disclosed. The method includes generating, based on forecasted general weather conditions, a first vehicle-weather resistance parameter for a first road segment of a travel route of a vehicle at a first predicted travel time; estimating a first segment energy consumption for the vehicle to travel the first road segment at the first predicted travel time based on the first vehicle-weather resistance parameter; determining a first segment energy deficit for the vehicle to travel the first road segment based on the first segment energy consumption and a stored energy level of the vehicle; and adjusting operation of electrical components of the vehicle to reduce the first segment energy deficit. The second aspect of the disclosure may seek to avoid discharging a stored energy before completing travel on a travel route. A technical benefit may include a more accurate estimation of vehicle energy consumption on a road segment.

According to a third aspect of the disclosure, a vehicle including a computer system that includes processing circuitry is disclosed. The computer system in the vehicle is configured to generate, based on forecasted general weather conditions, a first vehicle-weather resistance parameter for a first road segment of a travel route of a vehicle at a first predicted travel time; estimate a first segment energy consumption for the vehicle to travel the first road segment at the first predicted travel time based on the first vehicle-weather resistance parameter; determine a first segment energy deficit for the vehicle to travel the first road segment based on the first segment energy consumption and a stored energy level of the vehicle; and adjust operation of electrical components of the vehicle to reduce the first segment energy deficit. The third aspect of the disclosure may seek to avoid discharging a stored energy before completing travel on a travel route. A technical benefit may include a more accurate estimation of vehicle energy consumption on a road segment.

The disclosed aspects, examples (including any preferred examples), and/or accompanying claims may be suitably combined with each other as would be apparent to anyone of ordinary skill in the art. Additional features and advantages are disclosed in the following description, claims, and drawings and, in part, will be readily apparent therefrom to those skilled in the art or recognized by practicing the disclosure as described herein.

There are also disclosed herein computer systems, control units, code modules, computer-implemented methods, computer-readable media, and computer program products associated with the above-discussed technical benefits.

## BRIEF DESCRIPTION OF THE DRAWINGS

Examples are described in more detail below with reference to the appended drawings.

Figures 1A-1C are illustrations of a truck, a bus, and a car, respectively, as examples of vehicles of different vehicle types that may include aspects of the present disclosure;

Figure 2 is an illustration of a road map indicating a travel route divided into road segments that may be traveled by a vehicle employing aspects of the present disclosure;

Figure 3 is an illustration of a perspective view of a vehicle on a road segment of a travel route in an example of the present disclosure;

Figure 4 illustrates an exemplary system in which electrical components of a vehicle on a road segment may be adjusted based on a predicted stored energy level and an estimated vehicle energy consumption based on forecasted weather information;

Figure 5 is a flowchart of a method of the system in Figure 4 for deriving a function for a road segment based on collected vehicle data and applying the function to generate a vehicle-weather resistance parameter to predict energy consumption of the vehicle for a predicted travel time, determine an energy deficit based on a stored energy level, and adjust operation of electrical components of the vehicle based on the energy deficit;

Figure 6 is a flowchart of an exemplary method of a computer system for deriving the function of Figure 5 based on collected vehicle data;

Figure 7 illustrates an exemplary server that may collect the vehicle data and historic weather information and derive the function according to the flowchart in Figure 6;

Figures 8A and 8B are a flowchart of an exemplary method of applying the function generated according to the method in Figure 6 to adjust the energy components of a vehicle on a road segment at a predicted travel time based on forecasted weather information;

Figure 9 is an exemplary vehicle and computer system configured to perform the method of Figures 8A and 8B; and

Figure 10 is a schematic diagram of an exemplary computer system including computer circuitry in a server and/or an electronic control unit in a vehicle and configured to operate according to the present disclosure.

## DETAILED DESCRIPTION

The detailed description set forth below provides information and examples of the disclosed technology with sufficient detail to enable those skilled in the art to practice the disclosure.

The present disclosure will now be described more fully hereinafter with reference to the accompanying drawings, in which examples of the present disclosure are shown. This disclosure may be implemented in many different forms and should not be construed as limited to the examples set forth herein. Rather, the examples described herein are provided to convey the scope of the disclosure to persons of skill in the art. Like reference characters refer to like elements throughout the present disclosure.

Aspects disclosed herein include a system for estimating and adjusting vehicle energy consumption on a road segment based on predicted general weather conditions. In an example, the estimated energy consumption on a road segment in predicted general weather conditions is based on a correlation of historical generalized weather conditions to vehicle-motion resistance. Related methods of estimating and adjusting vehicle energy consumption are also disclosed. Among the factors that contribute to the amount of energy that a vehicle consumes to travel a road segment of a travel route are physical aspects of the specific road segment, vehicle data, and the environment immediately around the vehicle at the time of travel. While the physical aspects of the road segment and the vehicle may remain the same, the environment immediately around the vehicle, or localized weather, changes with the generalized weather in the area of the road segment. Although generalized weather information for a time of travel may be available, localized weather that is specific to the vehicle and the road segment may not be available. Generalized weather information is not necessarily indicative to the exact weather being experienced at a given time on a specific road segment being traveled.

In this regard, to provide a more accurate way of estimating energy consumption based on generalized weather conditions and adjust vehicle energy consumption based on the estimated energy consumption, exemplary aspects of the disclosure involve generating a vehicle-weather resistance parameter. The vehicle-weather resistance parameter indicates a localized weather condition for a vehicle traveling a road segment of a travel route, based on forecasted generalized weather information for the road segment. In some examples, the vehicle-weather resistance parameter may be generated by a function that is produced using previously collected vehicle data from vehicles of different vehicle types that traveled the road segment under various weather conditions. The vehicle-weather resistance parameter may be employed to estimate a segment energy consumption, which is an amount of energy consumed by a vehicle to travel the road segment in the weather conditions indicated by the forecasted generalized weather information. By comparing the estimated segment energy consumption to a stored energy level (e.g., charge) in a vehicle, it may be possible to determine that either there is enough charge in the vehicle to travel the road segment or there is an energy deficit. In the case of an energy deficit, operation of electrical components of the vehicle may be adjusted to reduce or avoid the energy deficit.

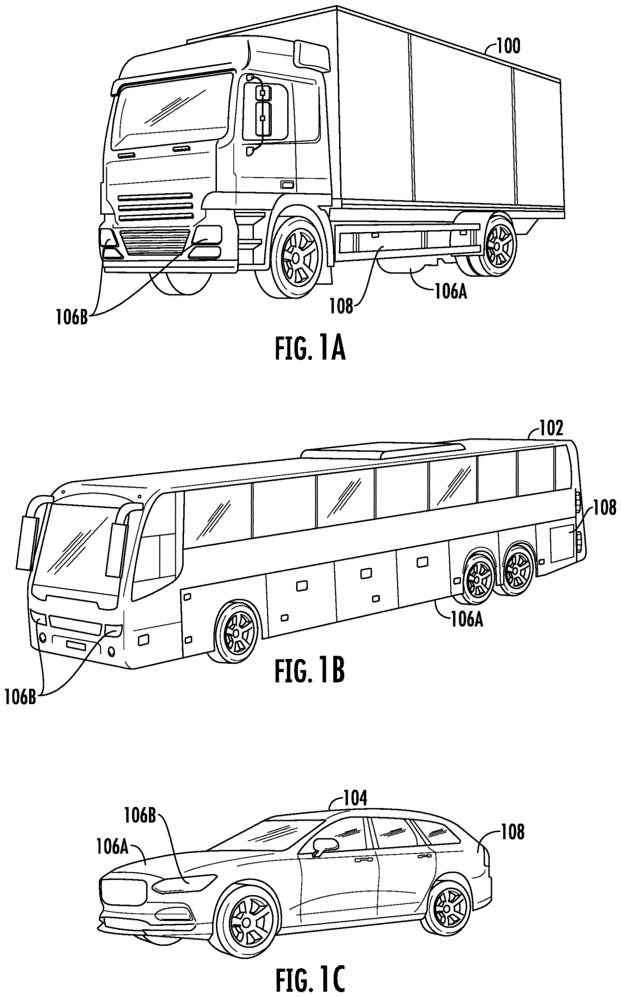

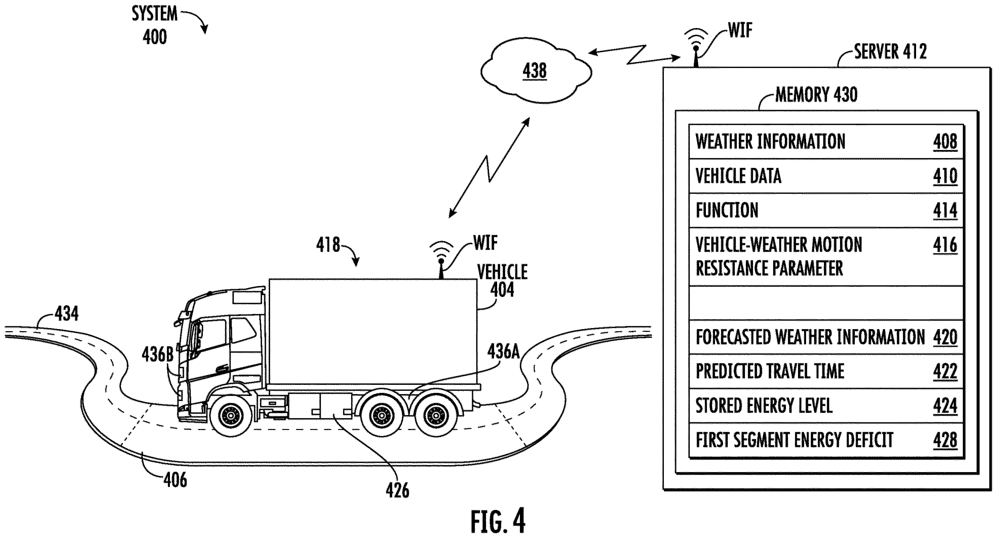

Before providing a detailed description of the function for generating the vehicle-weather resistance parameter and a system and method for estimating vehicle energy consumption based on the vehicle-weather resistance parameter starting at Figure 4, a discussion of vehicles, road segments of travel routes, and factors that contribute to vehicle energy consumption is first provided with reference to Figures 1A-3.

Figures 1A-1C are illustrations of exemplary vehicles according to the present disclosure having different vehicle types. In a first example, a truck 100 in Figure 1A is a first example of a vehicle, according to the present disclosure, that may be employed for cargo or freight transport. A bus 102 in Figure 1B is a second example of a vehicle, according to the present disclosure, that may be used for transporting large numbers of passengers. A passenger car (e.g., automobile) 104 in Figure 1C is a third example of a vehicle, according to the present disclosure, for personal transportation, for example. The vehicles 100, 102, and 104 are non-limiting examples of vehicles having different vehicle types and in which the present disclosure may be implemented.

Each of the vehicles 100, 102, and 104 may be entirely electrically powered vehicles (EPVs), or they may be hybrid electric vehicles (HEVs), which rely on a combination of electric power and an internal combustion "gas" engine (e.g., gasoline, alcohol, diesel, or propane), for example. The vehicles 100, 102, and 104, each include electrical components 106A/106B, which include one or more electric motors 106A for propulsion of the vehicles 100, 102, and 104. The electrical components 106 also include non-propulsion components 106B, also referred to herein as first electrical components 106B, which include components other than the electric motors 106A that consume electricity in the vehicles 100, 102, and 104. The electric motors 106A are employed to propel the vehicles 100, 102, and 104 along a road segment and the first electrical components 106B include electrical components that may be used for any other purposes in the vehicles 100, 102, 104. Although headlights of the vehicles 100, 102, and 104 are the only first electrical components 106B labeled in Figures 1A-1C, the first electrical components 106B may include any electrically powered electro-mechanical, electrical, and/or electronic circuits, devices, or machines. The electric motors 106A and the first electrical components 106B may be powered by electricity stored in a battery or battery system 108 in the vehicles 100, 102, 104.

The first electrical components 106B disposed in the vehicles 100, 102, 104 in Figures 1A-1C may provide lighting and safety, automation and convenience, passenger comfort, and passenger entertainment. For example, lighting and safety may include horns, windshield wipers, interior (e.g., dome) lighting, dashboard lighting, glove compartment lighting, headlights, turn indicators, ground-effect lighting, trunk lighting, decorative lighting, etc. The first electrical components 106B for automation may include electric motors for raising and lowering windows, antennas, convertible roofs, air dams, etc., and motors for opening and closing side doors, rear hatches, sunroofs, headlight wipers, cigarette lighters, retractable steps, etc. The first electrical components 106B for passenger comfort may include air cooling and/or heating, seat cooling and/or heating, steering wheel heating, exterior mirror heating, seat adjustment, etc. The first electrical components 106B for passenger entertainment may include video displays, audio systems, gaming consoles, device power and recharging ports, built-in cellular service, etc. The above is not intended to be a complete list of all possible electrical components whose operation may be adjusted to reduce an energy deficit but is intended to provide non-limiting list examples.

Since the introduction of EPVs and HEVs, the number of charging locations that have been made available to the public for recharging vehicle batteries has drastically increased, but the prevalence of electric charging stations has not begun to approach that of gas stations on streets, roads, and highways. Therefore, it is especially important in EPVs in which there are no alternative sources of power to avoid depleting the charge on the battery to a level that is insufficient to propel the vehicle to a next charging station. Accordingly, the driver or user of the vehicle needs to be able to accurately anticipate the energy consumption of the vehicle on a travel route to avoid such occurrences.

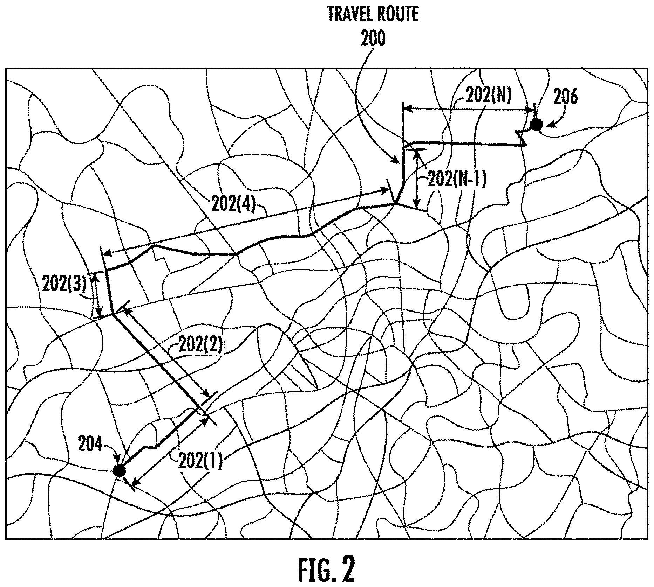

The rate of energy consumption for the purpose of propulsion of the vehicle varies according to the vehicle types in Figures 1A-1C above, which is due in part to their respective vehicle weights and air resistance profiles, among other factors. The rates of energy consumption may vary over the course of a travel route and may also be based on a driver of the vehicle. As explained further below, the rates of energy consumption may vary among the road segments of a travel route due to grade, velocity, road surface, etc. Additionally, the general weather conditions surrounding the road segment at the time of travel can also affect energy consumption. As shown in Figure 2, a vehicle may estimate a total energy consumption over a travel route 200 by dividing the travel route 200 into a plurality of road segments 202(1)-202(N), estimating the energy consumption of the vehicle in each of the plurality of road segments 202(1)-202(N), and totaling the respective energy consumptions. The road segments 202(1)-202(N) may be of any length and may be determined based on any aspects that affect energy consumption. The travel route 200 in Figure 2 extends from a start 204 to a destination 206 and may be divided into the road segments 202(1)-202(N) according to length, speed, traffic, pitch or grade, a posted speed limit, road curvature, or any other environmental factor or by any other desired method. The travel route 200 may be selected by a user or driver of the vehicle or may be identified by a trip planning software, for example, as a fastest route or a route that may require the least energy for vehicle propulsion.

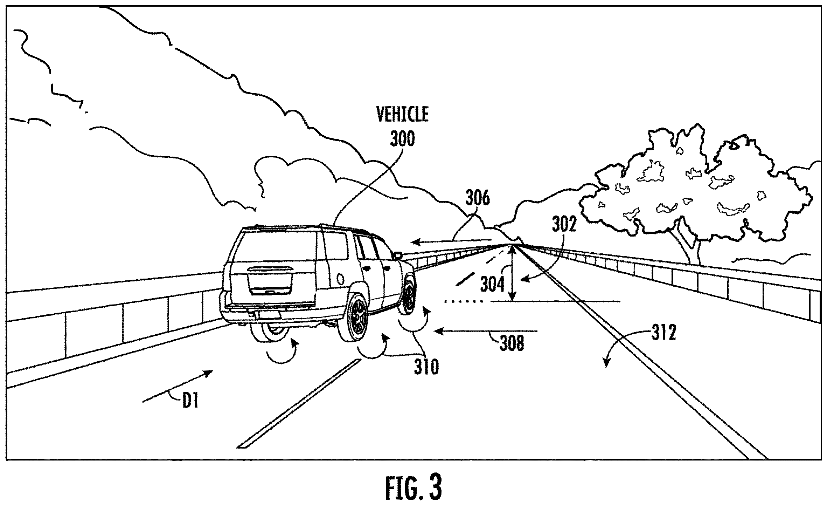

Figure 3 illustrates a vehicle 300 on a road segment 302. The vehicle 300 in Figure 3 may correspond to any of the vehicle types in Figures 1A, 1B, and 1C. The road segment 302 may be any of the road segments 202(1)-202(N) in Figure 2, for example. Some aspects of energy consumption of the vehicle 300 on the road segment 302 in Figure 3 may be reliably estimated because, in some examples, the aspect may not change over time. For example, an amount of energy consumed to propel the vehicle 300 in a particular direction D1 along the road segment 302 may include an amount of energy consumed to propel the vehicle through a change in elevation 304 (e.g., up a hill), which corresponds to a change in potential energy $W_{POT}$. Since the grade of the road segment 302 is unlikely to change, the change in elevation 304 that occurs while traveling along the road segment 302 is unlikely to change. Thus, the potential energy $W_{POT}$ for the vehicle 300 traveling the road segment 302 in the direction D1 can be reliably predicted based on, for example, the weight of the vehicle.

In another aspect, a change in kinetic energy $W_{KIN}$ of a vehicle can be determined based on vehicle data of the vehicle 300, such as changes in travel speed (velocity) in the direction D1. As shown in equation (1) below, in addition to energy consumption related to the potential energy $W_{POT}$ and the kinetic energy $W_{KIN}$, a total energy $W_{PROP}$ to propel the vehicle 300 through the road segment 302 includes energy consumed to overcome air resistance $W_{AIR}$, and energy consumed to overcome rolling resistance $W_{ROL}$.

$$(1) \qquad W_{PROP} = W_{POT} + W_{KIN} + W_{AIR} + W_{ROL}$$

Energy consumption $W_{AIR}$ due to air resistance and energy consumption $W_{ROL}$ due to rolling resistance may be resolved into fixed elements and elements that vary based on the environment in which the vehicle travels. Aspects of the environment of the road segment that affect energy consumption for vehicle propulsion may include general weather conditions ("weather conditions") and/or traffic conditions. The variable elements of the vehicle environment affecting the energy consumption $W_{AIR}$ due to air resistance include parallel air movement 306 (parallel to the vehicle 300) and perpendicular air movement 308 (perpendicular to the vehicle 300). These factors may be included in the localized weather conditions of the vehicle 300 on a road segment but are not provided in generalized weather information. Another variable element of the environment is rolling resistance 310 of the vehicle 300, on which the energy consumption $W_{ROL}$ due to rolling resistance is based.

The reported or forecasted generalized weather conditions typically indicate conditions above (e.g., 30 feet above) ground level rather than at a road surface 312 where the vehicle 300 is traveling. Furthermore, the terrain and elevation of the road segment 302, as well as the foliage and structures in the vicinity of the road segment 302, can also cause elements of the localized weather (e.g., parallel air movement 306, perpendicular air movement 308, and rolling resistance 310) to vary among road segments having the generalized weather conditions. Consequently, energy consumption of the vehicle 300 on the road segment 302 may not be reliably and accurately estimated directly from a forecast of the generalized weather conditions around the road segment 302 at the predicted travel time in the absence of more information.

In this regard, to provide a way to more accurately estimate consumption of a vehicle on a road segment from a forecast of the generalized weather conditions around the road segment at the predicted travel time in the absence of more information, a system 400 as illustrated in Figure 4 may be employed. The system 400 is configured to estimate and adjust a first segment energy consumption 402 of a vehicle 404 on a road segment 406 of a travel route 434 based on a correlation of historical generalized weather information ("weather information") 408 to vehicle data 410. As discussed in more detail below, a vehicle-weather resistance parameter can be generated by a function that is produced using previously collected vehicle data from vehicles of different vehicle types that traveled the road segment under various weather conditions. The vehicle-weather resistance parameter indicates a localized weather condition for a vehicle traveling a road segment of a travel route, based on forecasted generalized weather information for the road segment. Then, during actual driving of a vehicle, this vehicle-weather resistance parameter can then be employed to estimate a segment energy consumption, which is an amount of energy consumed by a vehicle to travel the road segment in the weather conditions indicated by the forecasted generalized weather information. By comparing the estimated segment energy consumption to a stored energy level (e.g., charge) in a vehicle, it may be possible to determine that either there is enough charge in the vehicle to travel the road segment or there is an energy deficit. In the case of an energy deficit, operation of electrical components of the vehicle may be adjusted to reduce or avoid the energy deficit.

In this regard, in an exemplary aspect, the system 400 records the vehicle data 410 of vehicles that travel the road segment 406 and collects the weather information 408 for the area of the road segment 406 for times corresponding to the recorded vehicle data 410 (e.g., corresponding to the days/times at which the vehicles previously traveled the road segment). A computer system (e.g., a server) 412 including a memory 430 stores the vehicle data 410 and the weather information 408 and derives a function 414 correlating the to the vehicle data 410 for the road segment 406. The computer system 412 may receive the vehicle data 410 through a wireless network 438 or cloud that may be accessed through a wireless interface WIF. In this regard, in some examples, the computer system 412 may be a cloud-based server. In some examples, the computer system 412 may be an electronic control unit (ECU) in the vehicle 404. The function 414 may be used to produce a vehicle-weather resistance parameter 416 that is an indication of how the localized weather 418 around the vehicle 404 in the weather conditions is associated with the weather information 408. In some examples, the function 414 may be dynamically updated as the vehicle data 410 is updated by current vehicle data 410. Since more current vehicle data 410 may more accurately reflect conditions of the road segment 406, the vehicle data 410 used to derive the function 414 may be weighted according to when it is received, with more current vehicle data 410 having more impact on the function 414.

Then, later during a driving cycle, the computer system 412 can then use the previously generated vehicle-weather resistance parameter 416, which corresponds to forecasted weather information 420 for a predicted travel time 422, to estimate the first segment energy consumption 402 for the vehicle 404 to travel the road segment 406 at the predicted travel time 422. The first segment energy consumption 402 may be compared, in real time, to a stored energy level or charge 424 remaining in a vehicle battery 426 of the vehicle 404 while or immediately prior to the vehicle 404 traveling on the road segment 406 to determine a first segment energy deficit 428. A first segment energy deficit 428 may mean that the battery 426 of the vehicle 404 will be depleted at the predicted rate of energy consumption before travel of the road segment 406 is complete. Alternatively, the first segment energy consumption 402 may be used in the determination of an energy budget for trip planning purposes, such as onboard trip planning applications. In response to a determination of the first segment energy deficit, the computer system 412 may adjust operation of electrical components 436A (e.g., propulsion components) and/or electrical components 436B (e.g., non-propulsion components) of the vehicle 404 to reduce the first segment energy deficit 428.

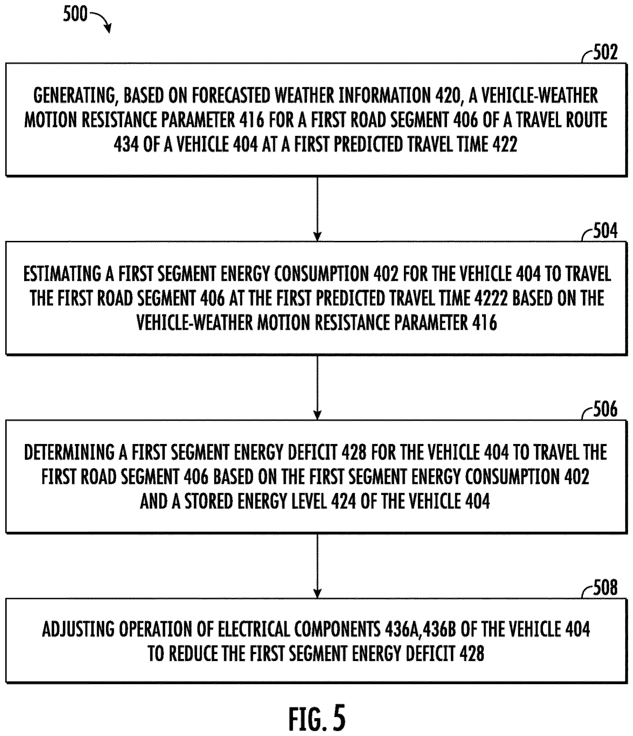

Figure 5 is a flowchart of a process 500 in the system 400 as illustrated in Figure 4. The process 500 includes generating, based on forecasted weather information 420, a vehicle-weather resistance parameter 416 for the first road segment 406 of a travel route 434 of a vehicle 404 at a first predicted travel time 422 (block 502); estimating a first segment energy consumption 402 for the vehicle 404 to travel the first road segment 406 at the first predicted travel time 422 based on the first vehicle-weather resistance parameter 416 (block 504); determining a first segment energy deficit 428 for the vehicle 404 to travel the first road segment 406 based on the first segment energy consumption 402 and a stored energy level 424 of the vehicle 404 (block 506); and adjusting operation of electrical components 436A, 436B of the vehicle 404 to reduce the first segment energy deficit 428 (block 508).

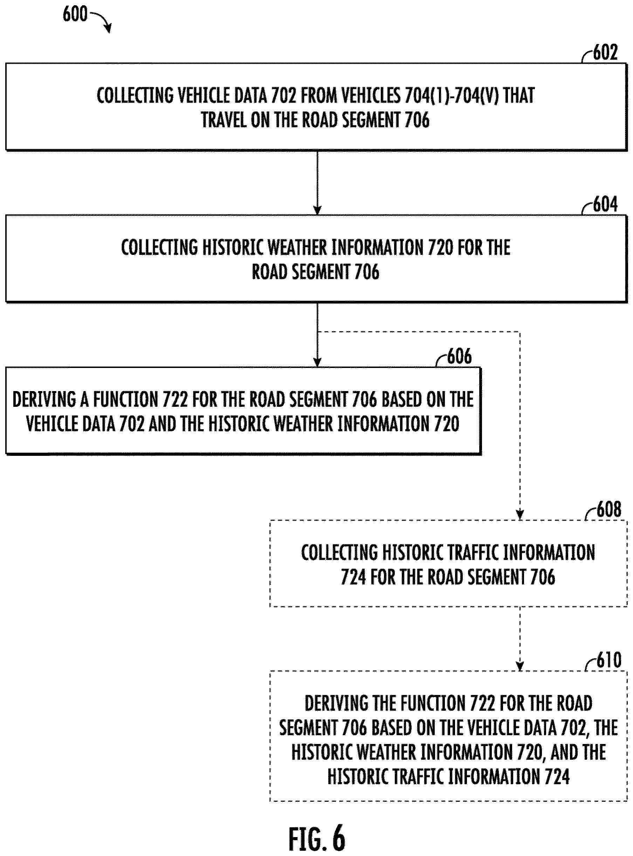

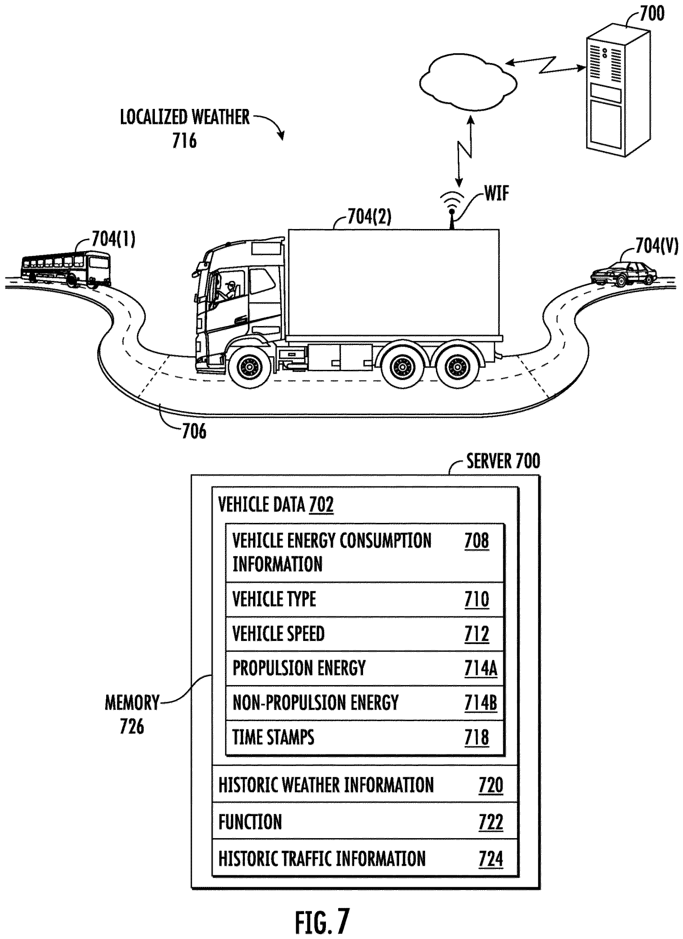

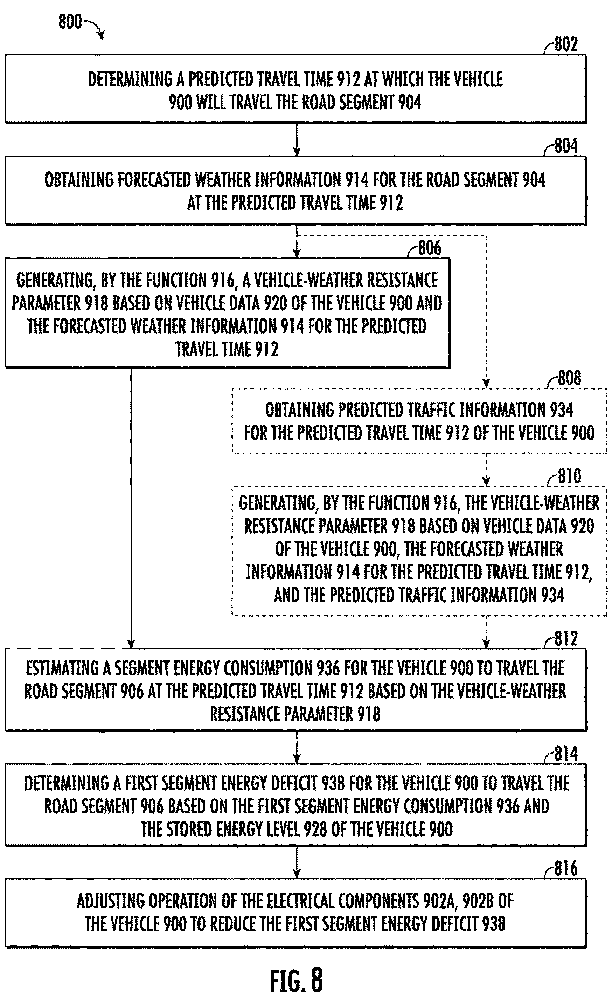

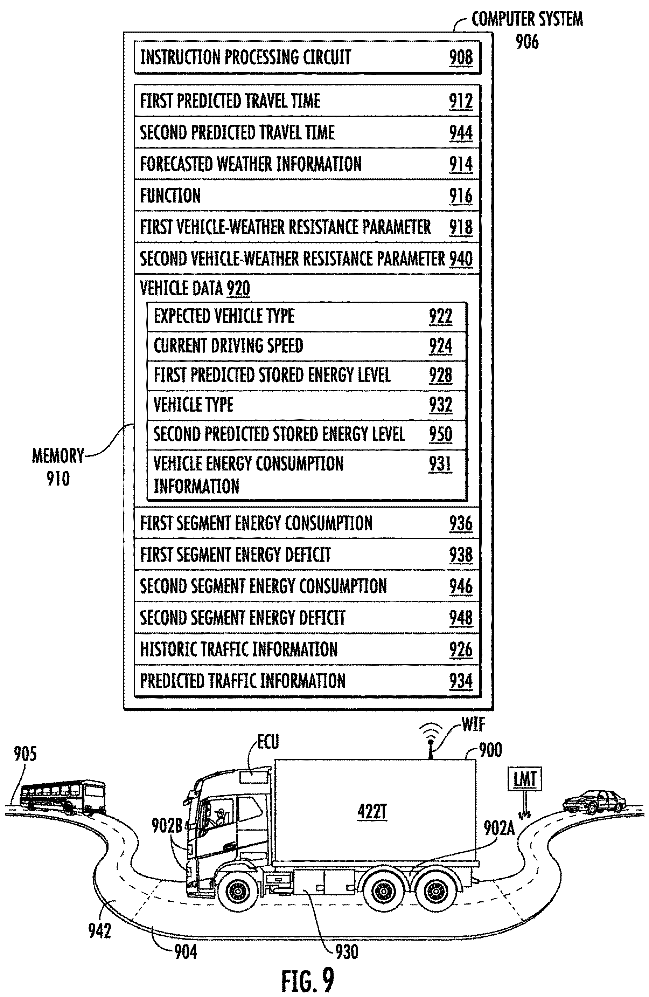

The process 500 may be described in more detail as a first part including a function generation process 600 and a second part including a function application process 800, wherein the function generation process 600 uses collected historic information to derive the function 414 that may be used to generate the vehicle-weather resistance parameter 416. The function generation process 600 in Figure 6 is described with reference to Figure 7. The function application process 800 employs the function 414 of Figure 4 to generate the vehicle-weather resistance parameter 416 and the predicted travel time 422 of the vehicle 404 to determine the first segment energy consumption 402, determines the first segment energy deficit 428, and adjusts the operation of electrical components 436A, 436B of the vehicle 404. The function application process 800 in Figure 8 is described with reference to Figure 9. The function generation process 600 and the function application process 800 are described separately but may each be executed in a same computer system, or in separate computer systems, and at least one of the separate computer systems may be disposed in the vehicle 404.

Figure 6 is a flowchart of a more detailed, exemplary function generation process 600 for generating the function 414 described with reference to the numbered elements in Figure 4. The function generation process 600 may be executed in a server 700, which may be the computer system 412 in Figure 4. The function 414 may be stored within the server 700 or may be communicated, by wired or wireless communication, to a second computing system (not shown), which may be the computer system in which the function application process 800 is executed or an intermediate computer system, such as a cloud-based server and corresponding cloud-based storage system.

The process 600 in the server 700 includes collecting vehicle data 702 from vehicles 704(1)-704(V) that travel on a road segment 706 (block 602). The vehicle data 702 may be transmitted wirelessly, through a wireless interface (WIF), to the server 700 or may be transmitted by wire at, for example, a battery charging station. The vehicle data 702 includes vehicle energy consumption information 708, which may include a total energy consumed by each of the vehicles 704(1)-704(V) to travel the road segment 706. The vehicle data 702 may include a vehicle type 710 and a vehicle speed 712 of each of the vehicles 704(1)-704(V) from which the vehicle data 702 is collected. In some examples, the vehicle energy consumption information 708 may be provided as a rate of energy consumption by the vehicles 704(1)-704(V) traveling the road segment 706, which can be combined with the vehicle speed 712 to calculate a total amount of energy consumed to travel the road segment 706. As described with reference to the vehicles 100, 102, and 104 in Figures 1A-1C, the vehicle energy consumption information 708 of the vehicles 704(1)-704(V) is based on a combination of propulsion energy 714A consumed by the electric motors 106A for propulsion and non-propulsion energy 714B consumed by non-propulsion components 106B. Thus, the server 700 may determine how much of the vehicle energy consumption information 708 is due to localized weather 716 of the vehicles 704(1)-704(V).

The vehicle data 702 also includes time stamps 718 identifying, for example, date and time of day information indicating when the vehicles 704(1)-704(V) traveled the road segment 706. The server 700 is configured to collect historic weather information 720 (e.g., generalized weather information) for the road segment 706 (e.g., for an area including the road segment 706) (block 604). The historic weather information 720 collected by the server 700 may be identified by the time stamps 718 of the vehicle data 702. In other words, the generalized weather conditions for an area including the road segment 706 for the times the vehicles 704(1)-704(V) traveled the road segment 706 may be obtained.

The process 600 includes deriving a function 722 for the road segment 706, which may be the function 414 in Figure 4, based on the vehicle data 702 and the weather information 720 (block 606). Based on the weather information 720 and the vehicle data 702 (e.g., vehicle energy consumption information 708), the function 722 can quantify an impact of the weather on the energy consumption of the vehicles 704(1)-704(V), which is referred to herein as the localized weather 716.

It may be determined that the traffic around the vehicles 704(1)-704(V) impacts the respective localized weather 716 as they travel the road segment 706. Thus, in some examples, the process 600 includes collecting historic traffic information 724 for the road segment 706 (block 608) for the times corresponding to the time stamps 718. In such examples, the process 600 may alternatively include deriving the function 722 for the road segment 706 based on the vehicle data 702, the historic weather information 720, and the historic traffic information 724 (block 610). The vehicle data 702 may be stored in a memory 726 in the server 700.

Figures 8A and 8B are a flowchart of a more detailed, exemplary function application process 800 for adjusting operation of the electrical components 902A, 902B of a vehicle 900 shown in Figure 9 on a road segment 904 of a travel route 905. The road segment 904 is a road segment for which a function 916 has been derived. The function 916 may be the function 722 generated in the function generation process 600 described with reference to the server 700 in Figure 7. The vehicle 900 may be any of the vehicles 100, 102, and 104 in Figures 1A-1C and the electrical components 902A, 902B may be the electrical components 106A, 106B described with reference to Figures 1A-1C. Thus, the electrical components 902A may be propulsion components, such as an electric motor, and the electrical components 902B may be non-propulsion components, such as lights, passenger comfort features, audio, etc. The function application process 800 may be executed in a computer system 906 configured to execute application software. In some examples, the computer system 906 may be a server, a home computer, such as a laptop, desktop, or tablet, or a smart phone. In other examples, the computer system 906 executing the function application process 800 may be an electronic control unit (ECU) disposed in the vehicle 900. A computer system 906 external to the vehicle 900 may communicate wirelessly with the vehicle 900 by way of a wireless interface WIF. The computer system 906 includes an instruction processing circuit 908 configured to execute the application software and a memory 910 configured to store such software and the data processed by such software.

As noted above, the function application process 800 is employed to adjust operation of the electrical components 902A, 902B of the vehicle 900 to travel a road segment 904. The process 800 includes determining a predicted travel time 912 at which the vehicle 900 will travel the road segment 904 (block 802). The predicted travel time 912 may be a time window during which the vehicle 900 is expected to travel the entire road segment 904. The predicted travel time 912 may be provided by a user, which may be a driver of the vehicle 900. Alternatively, the predicted travel time 912 may be calculated by a trip planning software executed in the ECU 906 in the vehicle 900 based on a current location of the vehicle 900 and an estimated time for traveling to the road segment 904 (e.g., based on posted speed limits and/or historical traffic data).

The process 800 includes obtaining forecasted weather information 914 for the road segment 904 at the predicted travel time 912 (block 804). Results of the process 800 may depend on the accuracy of the predicted travel time 912 and on the accuracy of the forecasted weather information 914. The process 800 includes generating, by the function 916, a vehicle-weather resistance parameter 918 based on vehicle data 920 of the vehicle 900 and the forecasted weather information 914 for the predicted travel time 912 (block 806).

The vehicle data 920 may include an expected vehicle speed 922, which may be based on current driving speed 924 of the vehicle 900, the posted speed limit(s) (LMT) of the road segment 904, and/or a user entered value. The expected vehicle speed 922 may also be based on historic traffic information 926 for the road segment. The vehicle data 920 includes a stored energy level 928 ("charge 928") of a battery 930 in the vehicle 900. The stored energy level 928 is an actual or expected state of charge of the battery 930 as the vehicle 900 begins to travel the road segment 904. The charge 928 may be a predicted stored energy level 928 based on a present state of the battery 930 and an estimate of vehicle energy consumption before the vehicle 900 arrives at the road segment 904.

The vehicle data 920 may also include vehicle energy consumption information931 indicating the operating states and/or energy consumption rates of electrical components 902A and 902B. The vehicle energy consumption information 931 may be employed to prioritize the sources of energy consumption of the vehicle 900, to determine a rate of energy consumption, and to determine options for reducing a rate of energy consumption. The vehicle data 920 may also include vehicle type 932, which may improve the accuracy of the vehicle-weather resistance parameter 918 generated by the function 916. Because the vehicle data 702 in Figure 7 used to generate the function 722, 916 may include the vehicle types 710, 932 of the vehicles 704(1)-704(V), the function 916 may base the vehicle-weather resistance parameter 918 for the vehicle 900 on vehicle data 702 from the vehicles 704(1)-704(V) having a same vehicle type 932 as the vehicle 900.

In some examples, the process 800 includes, optionally, obtaining predicted traffic information 934 for the predicted travel time 912 of the vehicle 900 (block 808) and generating, by the function 916, the vehicle-weather resistance parameter 918 based on the vehicle data 920 of the vehicle 900, the forecasted weather information 914 for the predicted travel time 912, and the predicted traffic information 934 (block 810).

The process 800 further includes estimating a segment energy consumption 936 for the vehicle 900 to travel the road segment 904 at the predicted travel time 912 based on the vehicle-weather resistance parameter 918 (block 812). The segment energy consumption 936 is an estimate of the total amount of energy or charge that is expected to be depleted from the battery 930 in the vehicle 900 over the course of traveling the road segment 904. The process 800 includes determining a first segment energy deficit 938 for the vehicle 900 to travel the road segment 904 based on the first segment energy consumption 936 and the stored energy level 928 of the vehicle 900 (block 814). The determination of the first segment energy deficit 938 may be determined by comparing (e.g., by subtraction) the segment energy consumption 936 to the stored energy level or charge 928 of the battery 930. The process 800 includes adjusting operation of the electrical components 902A, 902B of the vehicle 900 to reduce the first segment energy deficit 938 (block 816).

According to the process 800, a second vehicle-weather resistance parameter 940 may be generated for a second road segment 942 of the travel route 905 for a second predicted travel time 944. The computer system 906 may estimate a second segment energy consumption 946 for the vehicle 900 to travel the second road segment 942 at the second predicted travel time 944 based on the second vehicle-weather resistance parameter 940, determine a second segment energy deficit 948 for the vehicle 900 to travel the second road segment 942 based on the second segment energy consumption 946 and a second stored energy level 950 of the vehicle 900, and adjust operation of the electrical components 902A, 902B of the vehicle 900 to reduce the second segment energy deficit 948.

It should be understood that any data, information, or parameters employed in process 800 may be stored in the computer system 906, which may be the ECU 906 disposed in the vehicle 900, may be stored in the memory 910 and communicated from one to the other.

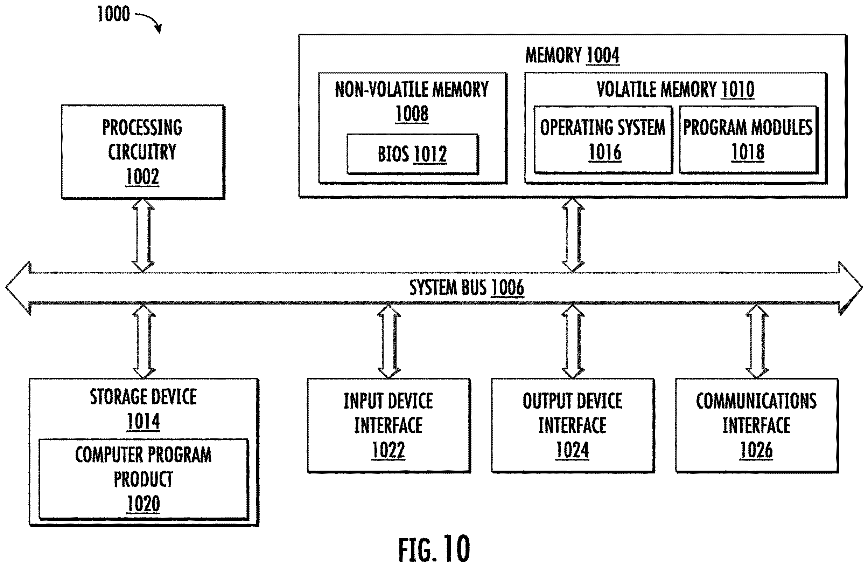

Figure 10 is a schematic diagram of a computer system 1000 for implementing examples disclosed herein. The computer system 1000 may be the ECU 906 in Figure 9, the server 700 in Figure 7, or the computer system 412 in Figure 4. The computer system 1000 is adapted to execute instructions from a computer-readable medium to perform these and/or any of the functions or processing described herein. The computer system 1000 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or signal processing or for executing computer code stored in memory 1004. The processing circuitry 1002 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Implementation examples are described in the following numbered clauses:

Example 1: A computer system comprising processing circuitry configured to:

generate, based on forecasted general weather conditions, a first vehicle-weather resistance parameter for a first road segment of a travel route of a vehicle at a first predicted travel time;
estimate a first segment energy consumption for the vehicle to travel the first road segment at the first predicted travel time based on the first vehicle-weather resistance parameter;
determine a first segment energy deficit for the vehicle to travel the first road segment based on the first segment energy consumption and a first stored energy level of the vehicle; and
adjust operation of electrical components of the vehicle to reduce the first segment energy deficit.

Example 2: The computer system of Example 1, further configured to:

estimate the first segment energy consumption of the vehicle on the first road segment based on a predicted travel speed of the vehicle on the first road segment; and
adjust operation of the electrical components of the vehicle, further comprising reducing an actual travel speed of the vehicle on the first road segment to less than the predicted travel speed.

Example 3: The computer system of Example 2, further configured to:
determine the predicted travel speed based on one of a current speed of the vehicle and a posted speed limit for the first road segment.
Example 4: The computer system of any preceding Example, further configured to:
estimate the first vehicle-weather resistance parameter for the first road segment based on a function of the forecasted general weather conditions on the first road segment for a predicted travel time.
Example 5: The computer system of any preceding Example, further configured to:
estimate the first vehicle-weather resistance parameter for the first road segment based on a function of predicted traffic conditions on the first road segment for a predicted travel time.
Example 6: The computer system of Example 5, wherein:

the travel route comprises at least a second road segment between a current location of the vehicle and the first road segment; and
the predicted travel time on the first road segment is based on a current time and a predicted travel time on the at least a second road segment.

Example 7: The computer system of Example 6, further configured to:

generate, based on the forecasted general weather conditions, a second vehicle-weather resistance parameter for the at least a second road segment at a second predicted travel time;
estimate a second segment energy consumption for the vehicle to travel the at least a second road segment at the second predicted travel time based on the second vehicle-weather resistance parameter;
determine a second segment energy deficit for the vehicle to travel the at least a second road segment based on the second segment energy consumption and a second stored energy level of the vehicle; and
adjust operation of the electrical components of the vehicle to reduce the second segment energy deficit.

Example 8: The computer system of any preceding Example, further configured to estimate the first segment energy consumption of the vehicle to travel the first road segment based on a vehicle type.
Example 9: The computer system of Example 8, wherein the vehicle type comprises one of a truck, a bus, and a passenger car.
Example 10: The computer system of any preceding Example, comprising an electronic control unit (ECU) disposed in the vehicle.
Example 11: The computer system of Example 10, wherein the ECU disposed in the vehicle is configured to estimate the first segment energy consumption.
Example 12: The computer system of any of Examples 1 to 9, comprising a server configured to couple to the vehicle through a wireless interface.
Example 13: The computer system of Example 12, further comprising generating the first vehicle-weather resistance parameter for the first road segment based on a first function derived from vehicle data provided by vehicles that travel the first road segment and generalized weather conditions at times corresponding to the vehicle data.
Example 14: The computer system of Example 13, further configured to dynamically update the first function based on updated vehicle data.
Example 15: The computer system of any preceding Example, wherein:

the electrical components of the vehicle comprise first electrical components directed to one or more of lighting, safety, automation, convenience, passenger comfort, and passenger entertainment;
the estimate of the first segment energy consumption of the vehicle is based on a predicted energy consumption of the first electrical components; and
adjusting energy consumption of the electrical components of the vehicle further comprises reducing a rate of energy consumption of at least one of the first electrical components.

Example 16: The computer system of Example 15, wherein the predicted energy consumption of the first electrical components is based on a current driver of the vehicle.
Example 17: The computer system of Example 14, further configured to update the first function in response to receiving newer vehicle data provided by vehicles that travel the first road segment and corresponding general weather conditions.
Example 18: The computer system of any preceding Example, wherein the first vehicle-weather resistance parameter is based on a combination of air resistance and rolling resistance caused by the forecasted general weather conditions.
Example 19: A method in a computer system, comprising:

generating, based on forecasted general weather conditions, a first vehicle-weather resistance parameter for a first road segment of a travel route of a vehicle at a first predicted travel time;
estimating a first segment energy consumption for the vehicle to travel the first road segment at the first predicted travel time based on the first vehicle-weather resistance parameter;
determining a first segment energy deficit for the vehicle to travel the first road segment based on the first segment energy consumption and a stored energy level of the vehicle; and
adjusting operation of electrical components of the vehicle to reduce the first segment energy deficit.

Example 20: A vehicle comprising a computer system comprising processing circuitry configured to:

generate, based on forecasted general weather conditions, a first vehicle-weather resistance parameter for a first road segment of a travel route of a vehicle at a first predicted travel time;

estimate a first segment energy consumption for the vehicle to travel the first road segment at the first predicted travel time based on the first vehicle-weather resistance parameter;
determine a first segment energy deficit for the vehicle to travel the first road segment based on the first segment energy consumption and a stored energy level of the vehicle; and
adjust operation of electrical components of the vehicle to reduce the first segment energy deficit.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1.   A computer system comprising processing circuitry configured to:

generate, based on forecasted general weather conditions, a first vehicle-weather resistance parameter for a first road segment of a travel route of a vehicle at a first predicted travel time;
estimate a first segment energy consumption for the vehicle to travel the first road segment at the first predicted travel time based on the first vehicle-weather resistance parameter;
determine a first segment energy deficit for the vehicle to travel the first road segment based on the first segment energy consumption and a first stored energy level of the vehicle; and
adjust operation of electrical components of the vehicle to reduce the first segment energy deficit.

2.   The computer system of claim 1, further configured to:
estimate the first segment energy consumption of the vehicle on the first road segment

based on a predicted travel speed of the vehicle on the first road segment; and adjust operation of the electrical components of the vehicle, further comprising
reducing an actual travel speed of the vehicle on the first road segment to less than the predicted travel speed.

3.   The computer system of claim 2, further configured to:
determine the predicted travel speed based on one of a current speed of the vehicle and a posted speed limit for the first road segment.

4. The computer system of any preceding claim, further configured to:
estimate the first vehicle-weather resistance parameter for the first road segment based on a function of the forecasted general weather conditions on the first road segment for a predicted travel time.

5. The computer system of any preceding claim, further configured to:
estimate the first vehicle-weather resistance parameter for the first road segment based on a function of predicted traffic conditions on the first road segment for a predicted travel time.

6. The computer system of claim 5, wherein:

   the travel route comprises at least a second road segment between a current location of the vehicle and the first road segment; and
   the predicted travel time on the first road segment is based on a current time and a predicted travel time on the at least a second road segment.

7. The computer system of claim 6, further configured to:

   generate, based on the forecasted general weather conditions, a second vehicle-weather resistance parameter for the at least a second road segment at a second predicted travel time;
   estimate a second segment energy consumption for the vehicle to travel the at least a second road segment at the second predicted travel time based on the second vehicle-weather resistance parameter;
   determine a second segment energy deficit for the vehicle to travel the at least a second road segment based on the second segment energy consumption and a second stored energy level of the vehicle; and
   adjust operation of the electrical components of the vehicle to reduce the second segment energy deficit.

8. The computer system of any preceding claim, further configured to estimate the first segment energy consumption of the vehicle to travel the first road segment based on a vehicle type.

9. The computer system of claim 8, wherein the vehicle type comprises one of a truck, a bus, and a passenger car.

10. The computer system of any preceding claim, comprising an electronic control unit (ECU) disposed in the vehicle.

11. The computer system of claim 10, wherein the ECU disposed in the vehicle is configured to estimate the first segment energy consumption.

12. The computer system of any of claims 1 to 9, comprising a server configured to couple to the vehicle through a wireless interface.

13. The computer system of claim 12, further comprising generating the first vehicle-weather resistance parameter for the first road segment based on a first function derived from vehicle data provided by vehicles that travel the first road segment and generalized weather conditions at times corresponding to the vehicle data.

14. A method in a computer system, comprising:

   generating, based on forecasted general weather conditions, a first vehicle-weather resistance parameter for a first road segment of a travel route of a vehicle at a first predicted travel time;
   estimating a first segment energy consumption for the vehicle to travel the first road segment at the first predicted travel time based on the first vehicle-weather resistance parameter;
   determining a first segment energy deficit for the vehicle to travel the first road segment based on the first segment energy consumption and a stored energy level of the vehicle; and
   adjusting operation of electrical components of the vehicle to reduce the first segment energy deficit.

15. A vehicle comprising a computer system comprising processing circuitry configured to:

   generate, based on forecasted general weather conditions, a first vehicle-weather resistance parameter for a first road segment of a travel route of a vehicle at a first predicted travel time;
   estimate a first segment energy consumption for the vehicle to travel the first road segment at the first predicted travel time based on the first vehicle-weather resistance parameter;

determine a first segment energy deficit for the vehicle to travel the first road segment based on the first segment energy consumption and a stored energy level of the vehicle; and
adjust operation of electrical components of the vehicle to reduce the first segment energy deficit.

FIG. 1A

FIG. 1B

FIG. 1C

TRAVEL ROUTE
200

FIG. 2

FIG. 3

EP 4 684 998 A1

FIG. 4

SYSTEM 400

WIF

SERVER 412

438

MEMORY 430

| WEATHER INFORMATION | 408 |
| VEHICLE DATA | 410 |
| FUNCTION | 414 |
| VEHICLE-WEATHER MOTION RESISTANCE PARAMETER | 416 |
| | |
| FORECASTED WEATHER INFORMATION | 420 |
| PREDICTED TRAVEL TIME | 422 |
| STORED ENERGY LEVEL | 424 |
| FIRST SEGMENT ENERGY DEFICIT | 428 |

418

WIF

VEHICLE 404

434

436B

436A

406

426

500

┌─ 502
GENERATING, BASED ON FORECASTED WEATHER INFORMATION 420, A VEHICLE-WEATHER MOTION RESISTANCE PARAMETER 416 FOR A FIRST ROAD SEGMENT 406 OF A TRAVEL ROUTE 434 OF A VEHICLE 404 AT A FIRST PREDICTED TRAVEL TIME 422

┌─ 504
ESTIMATING A FIRST SEGMENT ENERGY CONSUMPTION 402 FOR THE VEHICLE 404 TO TRAVEL THE FIRST ROAD SEGMENT 406 AT THE FIRST PREDICTED TRAVEL TIME 4222 BASED ON THE VEHICLE-WEATHER MOTION RESISTANCE PARAMETER 416

┌─ 506
DETERMINING A FIRST SEGMENT ENERGY DEFICIT 428 FOR THE VEHICLE 404 TO TRAVEL THE FIRST ROAD SEGMENT 406 BASED ON THE FIRST SEGMENT ENERGY CONSUMPTION 402 AND A STORED ENERGY LEVEL 424 OF THE VEHICLE 404

┌─ 508
ADJUSTING OPERATION OF ELECTRICAL COMPONENTS 436A,436B OF THE VEHICLE 404 TO REDUCE THE FIRST SEGMENT ENERGY DEFICIT 428

FIG. 5

600 ⌐

<strong>602</strong>

COLLECTING VEHICLE DATA 702 FROM VEHICLES 704(1)-704(V) THAT
TRAVEL ON THE ROAD SEGMENT 706

<strong>604</strong>

COLLECTING HISTORIC WEATHER INFORMATION 720 FOR THE
ROAD SEGMENT 706

<strong>606</strong>

DERIVING A FUNCTION 722 FOR THE ROAD SEGMENT 706 BASED ON THE
VEHICLE DATA 702 AND THE HISTORIC WEATHER INFORMATION 720

<strong>608</strong>

COLLECTING HISTORIC TRAFFIC INFORMATION
724 FOR THE ROAD SEGMENT 706

<strong>610</strong>

DERIVING THE FUNCTION 722 FOR THE ROAD
SEGMENT 706 BASED ON THE VEHICLE DATA 702, THE
HISTORIC WEATHER INFORMATION 720, AND THE
HISTORIC TRAFFIC INFORMATION 724

FIG. 6

LOCALIZED WEATHER
716

700

WIF

704(1)

704(2)

704(V)

706

SERVER 700

MEMORY
726

| VEHICLE DATA 702 | |
|---|---|
| VEHICLE ENERGY CONSUMPTION INFORMATION | 708 |
| VEHICLE TYPE | 710 |
| VEHICLE SPEED | 712 |
| PROPULSION ENERGY | 714A |
| NON-PROPULSION ENERGY | 714B |
| TIME STAMPS | 718 |
| HISTORIC WEATHER INFORMATION | 720 |
| FUNCTION | 722 |
| HISTORIC TRAFFIC INFORMATION | 724 |

FIG. 7

800 ↘

**802**
DETERMINING A PREDICTED TRAVEL TIME 912 AT WHICH THE VEHICLE 900 WILL TRAVEL THE ROAD SEGMENT 904

↓

**804**
OBTAINING FORECASTED WEATHER INFORMATION 914 FOR THE ROAD SEGMENT 904 AT THE PREDICTED TRAVEL TIME 912

↓

**806**
GENERATING, BY THE FUNCTION 916, A VEHICLE-WEATHER RESISTANCE PARAMETER 918 BASED ON VEHICLE DATA 920 OF THE VEHICLE 900 AND THE FORECASTED WEATHER INFORMATION 914 FOR THE PREDICTED TRAVEL TIME 912

**808**
OBTAINING PREDICTED TRAFFIC INFORMATION 934 FOR THE PREDICTED TRAVEL TIME 912 OF THE VEHICLE 900

↓

**810**
GENERATING, BY THE FUNCTION 916, THE VEHICLE-WEATHER RESISTANCE PARAMETER 918 BASED ON VEHICLE DATA 920 OF THE VEHICLE 900, THE FORECASTED WEATHER INFORMATION 914 FOR THE PREDICTED TRAVEL TIME 912, AND THE PREDICTED TRAFFIC INFORMATION 934

↓

**812**
ESTIMATING A SEGMENT ENERGY CONSUMPTION 936 FOR THE VEHICLE 900 TO TRAVEL THE ROAD SEGMENT 906 AT THE PREDICTED TRAVEL TIME 912 BASED ON THE VEHICLE-WEATHER RESISTANCE PARAMETER 918

↓

**814**
DETERMINING A FIRST SEGMENT ENERGY DEFICIT 938 FOR THE VEHICLE 900 TO TRAVEL THE ROAD SEGMENT 906 BASED ON THE FIRST SEGMENT ENERGY CONSUMPTION 936 AND THE STORED ENERGY LEVEL 928 OF THE VEHICLE 900

↓

**816**
ADJUSTING OPERATION OF THE ELECTRICAL COMPONENTS 902A, 902B OF THE VEHICLE 900 TO REDUCE THE FIRST SEGMENT ENERGY DEFICIT 938

FIG. 8

COMPUTER SYSTEM
906

| INSTRUCTION PROCESSING CIRCUIT | 908 |
|---|---|

| FIRST PREDICTED TRAVEL TIME | 912 |
|---|---|
| SECOND PREDICTED TRAVEL TIME | 944 |
| FORECASTED WEATHER INFORMATION | 914 |
| FUNCTION | 916 |
| FIRST VEHICLE-WEATHER RESISTANCE PARAMETER | 918 |
| SECOND VEHICLE-WEATHER RESISTANCE PARAMETER | 940 |

VEHICLE DATA 920

| EXPECTED VEHICLE TYPE | 922 |
|---|---|
| CURRENT DRIVING SPEED | 924 |
| FIRST PREDICTED STORED ENERGY LEVEL | 928 |
| VEHICLE TYPE | 932 |
| SECOND PREDICTED STORED ENERGY LEVEL | 950 |
| VEHICLE ENERGY CONSUMPTION INFORMATION | 931 |

| FIRST SEGMENT ENERGY CONSUMPTION | 936 |
|---|---|
| FIRST SEGMENT ENERGY DEFICIT | 938 |
| SECOND SEGMENT ENERGY CONSUMPTION | 946 |
| SECOND SEGMENT ENERGY DEFICIT | 948 |
| HISTORIC TRAFFIC INFORMATION | 926 |
| PREDICTED TRAFFIC INFORMATION | 934 |

MEMORY
910

905

ECU

WIF

900

LMT

902B

422T

902A

942

904

930

FIG. 9

FIG. 10

Europäisches
Patentamt

European
Patent Office

Office européen
des brevets

## EUROPEAN SEARCH REPORT

**Application Number**

EP 24 19 0863

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/038222 A1 (MEYER JASON [US] ET AL) 9 February 2017 (2017-02-09) * paragraph [0071] - paragraph [0072] * * paragraph [0060] * * paragraph [0064] * * paragraph [0009] * * paragraph [0093] * * paragraph [0128] * ----- | 1-15 | INV. B60L1/00 B60L15/20 B60L50/60 |
| A | GB 2 483 454 A (LIGHTNING CAR COMPANY LTD [GB]) 14 March 2012 (2012-03-14) * claims 1,10 * ----- | 1-15 | |
| A | US 2022/266837 A1 (ASKERDAL MIKAEL [SE]) 25 August 2022 (2022-08-25) * figure 1 * ----- | 8,9,13 | |
| A | US 11 814 032 B2 (FORD GLOBAL TECH LLC [US]) 14 November 2023 (2023-11-14) * the whole document * ----- | 1-15 | |
| A | US 5 913 917 A (MURPHY MICHAEL D [US]) 22 June 1999 (1999-06-22) * the whole document * ----- | 1-15 | **TECHNICAL FIELDS SEARCHED (IPC)** B60L |

The present search report has been drawn up for all claims

| Place of search | Date of completion of the search | Examiner |
|---|---|---|
| The Hague | 28 January 2025 | Wansing, Ansgar |

EPO FORM 1503 03.82 (P04C01)

## ANNEX TO THE EUROPEAN SEARCH REPORT
## ON EUROPEAN PATENT APPLICATION NO.

EP 24 19 0863

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2025

| Patent document cited in search report | Publication date | Patent family member(s) | Publication date |
|---|---|---|---|
| US 2017038222 A1 | 09-02-2017 | CN 105383496 A<br>DE 102015113701 A1<br>US 2016061610 A1<br>US 2017038222 A1 | 09-03-2016<br>03-03-2016<br>03-03-2016<br>09-02-2017 |
| GB 2483454 A | 14-03-2012 | NONE | |
| US 2022266837 A1 | 25-08-2022 | EP 4004489 A1<br>US 2022266837 A1<br>WO 2021018371 A1 | 01-06-2022<br>25-08-2022<br>04-02-2021 |
| US 11814032 B2 | 14-11-2023 | CN 114604250 A<br>DE 102021132088 A1<br>US 2022176939 A1 | 10-06-2022<br>09-06-2022<br>09-06-2022 |
| US 5913917 A | 22-06-1999 | NONE | |

EPO FORM P0459

For more details about this annex : see Official Journal of the European Patent Office, No. 12/82